# EUROPÄISCHE PATENTANMELDUNG

(11) **EP 2 114 060 A1**
(43) Veröffentlichungstag der Anmeldung: **04.11.2009**
(21) Anmeldenummer: 08008265.4
(22) Anmeldetag: 30.04.2008
(51) Int. Cl.: H04M 3/42

(54) **Konfigurierungs-Einrichtung für eine Kommunikationsanordnung und Verfahren zur Konfigurierung einer Kommunikationsanordnung**

(71) Anmelder: Gigaset Communications GmbH, 81379 München (DE)
(72) Erfinder: Többen, Wilfried, 46397 Bocholt (DE)
(74) Vertreter: Michalski Hüttermann & Partner Patentanwälte

(57) **Zusammenfassung**

Die Erfindung betrifft eine Konfigurierungs-Einrichtung (KA) für eine Kommunikationsanordnung mit einem Kommunikationsendgerät (EG) und mit einem zentralen Dienst (D), die eine erste Schnittstelle zu einem ersten Konfigurierungs-Zugang des Kommunikationsendgerätes (EG) und eine zweite Schnittstelle zu einem zweiten Konfigurierungs-Zugang des zentralen Dienstes (D) aufweist. Sie ist dabei zur Erzeugung einer Benutzeroberfläche für einen auf den zentralen Dienst (D) bezogenen Benutzerdialog und für eine Übermittlung dieser Benutzeroberfläche zu einem konfigurierenden Gerät, z.B. einem Administrations-PC oder dem Kommunikationsendgerät (EG) selbst, und für einen Empfang von den seitens eines Benutzers an dieser Benutzeroberfläche durchgeführten Eingaben eingerichtet ist. Zur Auswertung dieser Eingaben werden erste Konfigurierungs-Daten für das Kommunikationsendgerät (EG) und zweite Konfigurierungs-Daten für den zentralen Dienst (D) erzeugt, wobei die ersten Konfigurierungs-Daten über die erste Schnittstelle und die zweiten Konfigurierungs-Daten über die zweite Schnittstelle übertragen werden. Dadurch können sowohl das Kommunikationsendgerät (EG) als auch der zentrale Dienst (CD) mittels einer einzigen integrierten Benutzeroberfläche gleichzeitig in Bezug auf den Dienst konfiguriert werden.

## Beschreibung

Die Erfindung betrifft eine Konfigurierungs-Einrichtung für eine Kommunikationsanordnung mit einem Kommunikationsendgerät und mit einem zentralen Dienst, und die Erfindung betrifft ein Verfahren zur Konfigurierung einer Kommunikationsanordnung gemäß dem Oberbegriff des Patentanspruchs 16.

Elektronische Geräte sind heutzutage zumeist Mikroprozessorgesteuert, wobei zu ihrem Betrieb neben der Betriebssoftware (oft auch "Firmware" genannt) auch Betriebs-Parameter benötigt werden, die zumindest einmalig (oft herstellerseitig) in ein solches Gerät eingespeichert werden und bei Bedarf den jeweiligen Anforderungen angepasst werden müssen. Dies trifft insbesondere auch für Geräte der Kommunikationstechnik zu, bei denen sowohl technisch bedingte Einstellungen, als auch benutzerabhängige Einstellungen (auch "Kundendaten" genannt), konfiguriert werden müssen.

Über die klassische Funktionalität von Kommunikationsendgeräten, nämlich das einfache "Telefonieren", hinaus werden an oder mittels moderner Kommunikationsendgeräte eine Vielzahl weiterer Funktionen, Anwendungen und Leistungsmerkmale, im Folgenden kurz "Dienste" genannt, bereitgestellt. Während ein Teil dieser Dienste allein durch das Kommunikationsendgerät bereitgestellt werden, beispielsweise lokale Anrufbeantworter, lokale Rufnummernverzeichnisse, Kalender, Klingeltöne, Wahlwiederholung etc., werden andere Dienste durch eine zentrale Einrichtung bereitgestellt, welche mit dem jeweiligen Kommunikationsendgerät in Verbindung steht und somit den Zugriff auf den jeweiligen Dienst möglich macht. Beispiele für solche "zentralen Dienste" sind ein VoIP-Dienst (VoIP = Voice over Internet Protocol), ein E-Mail-Dienst, ein zentraler Kalender-Dienst, ein zentraler Voice-Mail-Dienst etc..

Viele dieser genannten zentralen Dienste machen es erforderlich, dass für ihre Einrichtung und für den Betrieb zumindest sporadisch sowohl solche Parameter konfiguriert oder geändert werden müssen, die den zentralen Dienst selbst, der in der Regel auf einem zentralen Server abläuft, betreffen, als auch solche Parameter und Einstellungen, die bezogen auf diesen zentralen Dienst in dem verwendeten Kommunikationsendgerät vorgenommen werden müssen. So müssen beispielsweise bei einem zentralen Kalender-Dienst die dem Benutzer eines Kommunikationsendgerätes zugeordneten Termine und Erinnerungen in eine Datenbank eingegeben bzw. dort gepflegt werden, die in einem "netzseitigen", also zentralen Datenspeicher angeordnet ist, während beispielsweise die Melodie, die an einem Kommunikationsendgerät zur Signalisierung eines der Termine ausgegeben werden soll, in dem Kommunikationsendgerät selbst konfiguriert wird.

Dabei hat sich bei den Kommunikationsanordnungen mit zentralen Diensten als nachteilig erwiesen, dass zur Konfigurierung ein- und desselben Dienstes getrennt sowohl erste Konfigurierungs-Daten auf das Kommunikationsendgerät angewendet werden müssen, als auch zweite Konfigurierungs-Daten auf den zentralen Dienst selbst, so dass ein Benutzer häufig mit zwei getrennten Konfigurierungs-Vorgängen mit oft völlig unterschiedlichen Benutzeroberflächen konfrontiert ist. Dadurch ist die Konfigurierung einer Kommunikationsanordnung mit einem Kommunikationsendgerät und einem zentralen Dienst oft umständlich und wenig benutzerfreundlich.

Es ist also eine Aufgabe der vorliegenden Erfindung, ein Verfahren und eine Konfigurierungs-Einrichtung für eine Kommunikationsanordnung mit einem Kommunikationsendgerät und mit einem zentralen Dienst vorzuschlagen, wobei eine einfache und benutzerfreundliche Bedienung erfolgt.

Die Aufgabe wird durch eine Konfigurierungs-Einrichtung gemäß dem Patentanspruch 1 und durch ein Verfahren zur Konfigurierung gemäß dem Patentanspruch 13 gelöst.

Dabei wird eine Konfigurierungs-Einrichtung für eine Kommunikationsanordnung mit einem Kommunikationsendgerät und mit einem zentralen Dienst vorgeschlagen, wobei die Konfigurierungs-Einrichtung eine erste Schnittstelle zu einem ersten Konfigurierungs-Zugang des Kommunikationsendgerätes und eine zweite Schnittstelle zu einem zweiten Konfigurierungs-Zugang des zentralen Dienstes aufweist. Dabei ist die Konfigurierungs-Einrichtung zur Erzeugung einer (beispielsweise grafischen, sprachbasierten und/oder textbasierten) Benutzeroberfläche für einen auf den zentralen Dienst bezogenen Benutzerdialog und für eine Übermittlung dieser Benutzeroberfläche zu einem konfigurierenden Gerät, vorteilhafter Weise dem Kommunikationsendgerät, und für einen Empfang von seitens eines Benutzers mittels dieser Benutzeroberfläche durchgeführten Eingaben eingerichtet. Dabei ist die Konfigurierungs-Einrichtung auch zur Auswertung dieser Eingaben eingerichtet, wobei die Konfigurierungs-Einrichtung anhand der Eingaben zur Erzeugung erster Konfigurierungs-Daten für das Kommunikationsendgerät und zweiter Konfigurierungs-Daten für den zentralen Dienst ausgebildet ist, und wobei die Konfigurierungs-Einrichtung zur Übertragung der ersten Konfigurierungs-Daten über die erste Schnittstelle zu dem Kommunikationsendgerät und der zweiten Konfigurierungs-Daten über die zweite Schnittstelle zu der zentralen Komponente des Dienstes eingerichtet ist.

Durch eine solche Konfigurierungs-Einrichtung genügt eine einzige, einheitliche Benutzeroberfläche, um sowohl die Konfigurierung des zentralen Dienstes, als auch die darauf bezogenen Parameter in dem Kommunikationsendgerät vorzunehmen, wodurch sich eine einfache, schnelle und benutzerfreundliche Bedienbarkeit ergibt. Prinzipiell können somit auch die Parameter weiterer mit dem Dienst verknüpfter Geräte und Einrichtungen konfiguriert werden.

Diese Vorteile werden auch durch den Einsatz eines Verfahrens zur Konfigurierung einer Kommunikationsanordnung mit einem Kommunikationsendgerät und mit einem zentralen Dienst erreicht, wobei die Konfigurierungs-Einrichtung eine erste Schnittstelle zu einem ersten Konfigurierungs-Zugang des Kommunikationsendgerätes und eine zweite Schnittstelle zu einem zweiten Konfigurierungs-Zugang des zentralen Dienstes aufweist. Dabei empfängt die Konfigurierungs-Einrichtung in einem ersten Schritt von dem Kommunikationsendgerät eine Anfrage zur auf das Kommunikationsendgerät bezogenen Konfigurierung des zentralen Dienstes. In einem zweiten Schritt erzeugt die Konfigurierungs-Einrichtung eine Benutzeroberfläche (z.B. grafisch, textbasiert oder als sprachbasierter Dialog) für die Konfigurierung und überträgt diese zur Anzeige und Bedienung durch einen Benutzer an das konfigurierende Geräte, z.B. Kommunikationsendgerät, Administrations-PC o.ä.. In einem dritten Schritt wird zumindest eine Benutzereingabe an der Benutzeroberfläche zu der Konfigurierungs-Einrichtung übertragen, und in einem vierten Schritt wird durch die Konfigurierungs-Einrichtung diese Eingabe ausgewertet, wobei abhängig von der zumindest einen Benutzereingabe zumindest ein erster Befehl zur Konfigurierung des Kommunikationsendgerätes erzeugt und an das Kommunikationsendgerät übermittelt und dort angewendet wird, und wobei zumindest ein zweiter Befehl zur Konfigurierung des zentralen Dienstes erzeugt, zu dem zentralen Dienst übertragen und dort angewendet wird.

Vorteilhafte Ausgestaltungen der erfindungsgemäßen Konfigurierungs-Einrichtung sind in den abhängigen Patentansprüchen 2 bis 15 angegeben. Die diesbezüglichen Merkmale und deren Vorteile gelten sinngemäß auch für das erfindungsgemäße Verfahren.

Vorteilhafterweise ist die Konfigurierungs-Einrichtung für die Übermittlung der Benutzeroberfläche zu dem Kommunikationsendgerät und für den Empfang der von dem Benutzer an dem Kommunikationsendgerät mittels der Benutzeroberfläche getätigten Eingaben und Befehle mit einer dritten Schnittstelle für einen Datenaustausch mit dem Kommunikationsendgerät ausgestattet. Dabei ist die dritte Schnittstelle in einem bevorzugten Ausführungsbeispiel zum Datenaustausch mittels des HTTP-Protokolls und/oder des WAP-Protokolls ausgebildet, weil damit viele solcher Kommunikationsendgeräte verwendet werden können, die bereits ohnehin zum Datenaustausch mittels dieser Protokolle eingerichtet sind. Insbesondere eignen sich diese Protokolle zum Transport solcher Daten, die eine Benutzeroberfläche als HTML-Seite oder als WML-Seite (HTML = Hypertext Mark-Up Language; WML = Wireless Mark-Up Language) betreffen. Dazu ist selbstverständlich die Konfigurierungs-Einrichtung vorteilhaft zur Erzeugung der Benutzeroberfläche als HTML-Seite oder als WML-Seite eingerichtet. Zur Realisierung einer einzigen "integrierten" Benutzeroberfläche umfasst diese Benutzeroberfläche vorteilhaft sowohl erste Elemente zur Konfigurierung des Kommunikationsendgerätes als auch zweite Elemente zur Konfigurierung des zentralen Dienstes.

Eine Anpassung an den Konfigurierungs-Zugang des Kommunikationsendgerätes kann erreicht werden, indem die erste Schnittstelle einen Umsetzer für eine Umsetzung der ersten Konfigurierungs-Daten in ein von dem Kommunikationsendgerät abhängiges erstes Administrations-Protokoll aufweist. Der Umsetzer umfasst dabei vorteilhaft Mittel zur Umsetzung und Übermittlung der ersten Konfigurierungs-Daten mittels des TR-069-Protokolls (auch als CPE WAN Management Protocol (CWMP) bekannt) oder mittels OMA-DM (Open Mobile Alliance - Device Management), welches von einer Vielzahl gebräuchlicher Kommunikationsendgeräte und anderer Netzwerkkomponenten unterstützt wird.

Analog dazu ist die zweite Schnittstelle vorteilhaft zur Übermittlung der zweiten Konfigurierungs-Daten mittels eines von dem zentralen Dienst verwendeten Administrations-Protokolls eingerichtet.

Der Einsatz zusätzlicher Hardware und anderer Betriebsmittel kann verringert oder vermieden werden, wenn die Konfigurierungs-Einrichtung als ein mittels einer Software gebildeter Dienst ausgebildet ist, wobei dieser Dienst und der zentrale Dienst vorteilhaft auf einer gemeinsamen Server-Hardware installiert sind. Dennoch kann beim Einsatz geeigneter DatenKanäle oder ähnlicher Übertragungseinrichtungen auch eine räumliche Trennung der Konfigurierungs-Einrichtung von dem zentralen Dienst gegeben sein; die Konfigurierungs-Einrichtung kann sogar auf der Hardware eines entsprechend ausgestatteten Kommunikationsendgerätes installiert werden.

Eine breite Anwendbarkeit der Konfigurierungs-Einrichtung ist gegeben, wenn diese zur Verwendung mit einem VoIP-Telefon, einem DECT-Telefon (DECT = Digital Enhanced Cordless Telephony) oder einem GSM-Telefon (GSM = Global System For Mobile Communication) eingerichtet ist.

Der Einsatz handelsüblicher Kommunikationsendgeräte wird weiter erleichtert, wenn die Konfigurierungs-Einrichtung zur Generierung und zur Übertragung der Benutzeroberfläche zu einer auf dem Kommunikationsendgerät installierten Browser-Software eingerichtet ist.

Mit der Konfigurierungs-Einrichtung kann eine Vielzahl der häufigsten Konfigurierungs-Aufgaben erfüllt werden, wenn diese zur Konfigurierung eines VoIP-Dienstes, eines E-Mail-Dienstes oder eines Voice-Mail-Dienstes als zentralem Dienst eingerichtet ist.

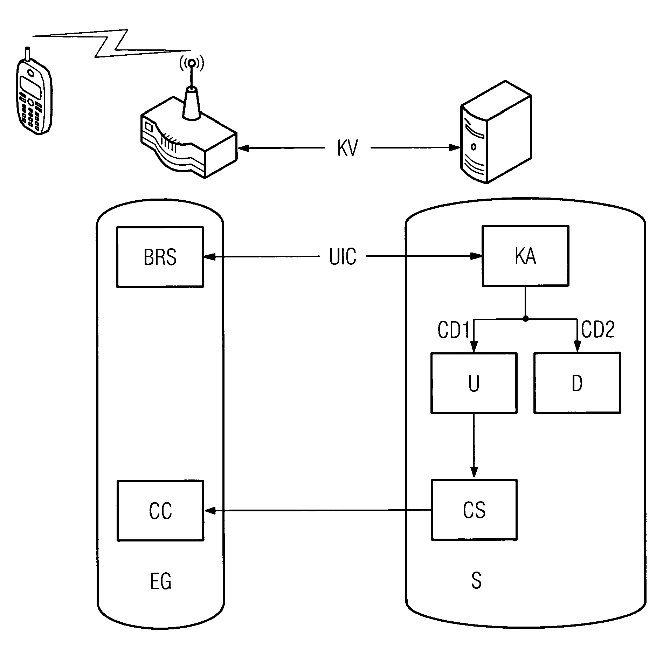

Ausführungsbeispiele einer erfindungsgemäßen Konfigurierungs-Einrichtung werden nachfolgend anhand der Zeichnung erläutert. Sie dienen gleichzeitig der Erläuterung eines erfindungsgemäßen Verfahrens zur Konfigurierung.

Dabei zeigt die einzige Figur in schematischer Darstellung einer Kommunikationsanordnung mit einem Server, auf dem ein zentraler Dienst und eine Konfigurierungs-Einrichtung installiert sind, und ein Kommunikationsendgerät, welches im vorliegenden Ausführungsbeispiel aus einer Basisstation und aus einem Mobilteil besteht.

In der Figur ist schematisch eine Kommunikationsanordnung dargestellt, welche aus einem Server S und einem Kommunikationsendgerät EG besteht. Im vorliegenden Ausführungsbeispiel ist das Kommunikationsendgerät EG ein schnurloses VoIP-Telefon, welches aus einer Basisstation und aus einem Mobilteil besteht; selbstverständlich können anstelle dessen auch andere Kommunikationsendgeräte wie analoge oder ISDN-Telefone, Multimedia-PCs, PDAs, GSM-Mobiltelefone o.ä. eingesetzt werden. Das Kommunikationsendgerät EG umfasst eine Vielzahl Funktionen, die neben einer Hardware-Ausstattung (wie z.B. Display, Tastatur) auch in Software realisierte Funktionen umfassen, insbesondere ein Browser BRS und ein Konfigurations-Client CC, wobei letzter eine Konfigurierung des Kommunikationsendgerätes EG mittels eines externen Gerätes und über eine Daten- oder Kommunikationsverbindung gestattet.

Der Server S ist Bestandteil desselben Kommunikationsnetzwerkes, in dem auch das Kommunikationsendgerät EG betrieben wird, und steht mit diesem mittels einer Netzwerkverbindung KV (Datenverbindung oder Kommunikationsverbindung) in Kontakt. Dabei ist der Server S eine Hardware-Plattform, auf der verschiedene voneinander unabhängige Prozesse ablaufen. Einer dieser Prozesse ist der Dienst D, der als zentraler Dienst D dem Kommunikationsendgerät EG und anderen Kommunikationsendgeräten (in der Figur nicht gezeigt) der Kommunikationsanordnung bzw. des Kommunikationsnetzwerkes zur Verfügung steht. Im vorliegenden Ausführungsbeispiel ist der Dienst D ein VoIP-Dienst, also ein Dienst, der in der betrachteten Kommunikationsanordnung eine Sprachdatenkommunikation gemäß dem Internet-Protokoll zur Verfügung stellt. Dazu umfasst der Dienst D unter anderem eine Gatekeeper-Funktionalität und ein Gateway (beide in der Figur nicht dargestellt). Weitere Prozesse, die auf dem Server S ablaufen, sind die Konfigurierungs-Einrichtung KA ("Konfigurierungs-Anwendung"), der Umsetzer U und der Konfigurierungs-Server S; diese Prozesse und Komponenten werden mit der nachfolgenden Schilderung eines Ausführungsbeispieles für die Konfigurierung des zentralen Dienstes D und das Kommunikationsendgerät EG näher beschrieben.

Nachfolgend wird anhand der in der Figur gezeigten Kommunikationsanordnung beschrieben, wie das Kommunikationsendgerät EG und der zentrale Dienst D konfiguriert werden, so dass diese beiden Komponenten zusammenwirken können, d. h. für das vorliegende Ausführungsbeispiel, dass damit eine Sprachdatenkommunikation durchgeführt werden kann. Dazu ist es erforderlich, dass in dem Kommunikationsendgerät EG erste Parameter konfiguriert werden, beispielsweise eine VoIP-Rufnummer, die Angaben über die zu verwendenden Sprach-Codecs, die Zugangsdaten für die durch den Dienst D gebildeten Gatekeeper und das Gateway etc.. Andere, zweite Parameter sind dagegen in dem zentralen Dienst D zu konfigurieren, dies betrifft beispielsweise die Netzwerkadresse (IP-Adresse) des Kommunikationsendgerätes EG, Berechtigungen, Zugangsparameter für ein öffentliches Kommunikationsnetzwerk, Abrechnungsinformationen etc.. Dabei sind einige dieser zweiten Parameter auch identisch für das Kommunikationsendgerät EG und für den zentralen Dienst D zu konfigurieren, beispielsweise die zu verwendenden Sprach-Codecs, die hinsichtlich der Verbindung (Datenverbindung) zwischen dem Kommunikationsendgerät EG und dem Dienst D verwendet werden sollen.

Die Konfigurierungs-Sitzung wird - im vorliegendem Ausführungsbeispiel - von einem Benutzer des Kommunikationsendgerätes EG gestartet; in diesem Fall wird das Kommunikationsendgerät EG als konfigurierendes Gerät verwendet. Neben dieser bevorzugten Variante kann aber auch ein drittes Gerät, beispielsweise ein am Internet angeschlossener PC o.ä., eingesetzt werden. Die Konfigurierungs-Sitzung wird initiiert, indem an dem Kommunikationsendgerät EG der Browser BRS gestartet und dort die Adresse (URL, URI) der Konfigurierungs-Einrichtung KA eingegeben wird, wodurch eine entsprechende Anforderungsmeldung von dem Kommunikationsendgerät EG zu dem Server S und damit zu der Konfigurierungs-Einrichtung KA versendet und somit die Konfigurierungs-Sitzung eröffnet wird. Optional kann an dieser Stelle eine Authentifizierung erfolgen und außerdem auch eine Abfrage, mit der die Konfigurierungs-Einrichtung KA den Typ des Kommunikationsendgerätes EG und Zugangsparameter für den Konfigurierungs-Client CC abfragt; diese Daten können aber auch alternativ bereits mit der Anforderungsmeldung zu der Konfigurierungs-Einrichtung KA übermittelt werden. Die Konfigurierungs-Einrichtung KA überträgt nun eine Web-Site mit einem Auswahlmenü über die Datenverbindung UIC (User Interface Connection) zu dem Browser BRS, wodurch dem Benutzer diejenigen Dienste D zur Auswahl angeboten werden, die über die Konfigurierungs-Einrichtung KA konfigurierbar sind; im vorliegenden Ausführungsbeispiel ist dies allein der zentrale Dienst D. Falls, wie vorliegend, nur ein einziger konfigurierbarer Dienst vorhanden ist, kann dieser Zwischenschritt entfallen.

Mit Auswahl des zentralen Dienstes D durch den Benutzer erzeugt nun die Konfigurierungs-Einrichtung KA eine Benutzeroberfläche, die auf die Konfigurierung des zentralen Dienstes D in Verbindung mit dem Endgeräte-Typ des Kommunikationsendgerätes EG gerichtet ist, wobei auch eine ggf. bereits bekannte Berechtigung des Benutzers berücksichtigt wird, d.h., dass nur solche Einstellungen und Parameter zur Bearbeitung freigegeben und angezeigt werden, die sowohl auf das Kommunikationsendgerät EG als auch auf den zentralen Dienst D sinnvoll angewendet werden können und die zudem einem ggf. vorhandenen Berechtigungsprofil des Benutzers entsprechen. Dabei werden natürlich solche Parameter, die sowohl auf das Kommunikationsendgerät EG als auch auf den Dienst D anzuwenden sind, nur einmal auf der Benutzeroberfläche dargestellt.

Der Benutzer des Kommunikationsendgerätes EG trägt nun die erforderlichen Parameter in die Benutzeroberfläche ein bzw. tätigt die gewünschten Einstellungen, wobei spätestens durch die Eingabe einer Bestätigung ("OK-Taste") diese durchgeführten Eingaben wiederum über die Datenverbindung UIC zu der Konfigurierungs-Einrichtung KA übertragen und dort ausgewertet werden. Eine Entscheidungsinstanz der Konfigurierungs-Einrichtung KA entscheidet dabei bei den verschiedenen Eingaben jeweils darüber, ob sich daraus erste Konfigurierungs-Daten CD1 zur Konfigurierung erster Parameter für das Kommunikationsendgerät EG, zweite Konfigurierungs-Daten CD2 zur Konfigurierung zweiter Parameter für den Dienst D, oder beides ergeben. Dementsprechend erzeugt die Konfigurierungs-Einrichtung sowohl einen ersten Datensatz mit ersten Konfigurierungs-Daten CD1 und übermittelt diese über eine erste Schnittstelle (in der Figur nicht dargestellt) an den Konfigurierungs-Client CC des Kommunikationsendgerätes EG und einen zweiten Datensatz mit zweiten Konfigurierungs-Daten CD2 und übermittelt über eine zweite, hier: Server-interne, Schnittstelle diese zu dem Dienst D.

Im vorliegenden Ausführungsbeispiel wird das Kommunikationsendgerät EG nicht direkt durch die Konfigurierungs-Einrichtung KA konfiguriert, sondern mittels einer serverbasierten Komponente, nämlich dem Konfigurierungs-Server CS. Dieser bildet das serverseitige Gegenstück dem Konfigurierungs-Client CC und ist mit diesem über einen separaten Datenkanal verbunden. Während der Konfigurierungs-Server CS mit dem Konfigurierungs-Client CC über ein anderes (hier: proprietäres) Konfigurations-Protokoll kommuniziert, bietet er seitens des Servers S bzw. anderer, externer Komponenten eine Konfigurierungs-Schnittstelle eines genormten Protokolls, hier das TR-069-Protokoll. Sofern, wie im vorliegenden Ausführungsbeispiel, die Konfigurierungs-Einrichtung ein anderes Konfigurierungs-Protokoll verwendet (z.B. CSTA, SNMP o.ä.), werden die ersten Konfigurierungsdaten CD1 noch durch einen Umsetzer U zwischen den verwendeten Konfigurierungs-Protokollen jeweils umgesetzt.

Durch die vorstehend beschriebene Konfiguration kann die Konfigurierungs-Einrichtung KA dynamisch auf die Bedürfnisse des Benutzers angepasst werden, z.B. in Abhängigkeit von der bei einem Provider bestellten Dienstleistung D bzw. einer für ihn vorgesehenen Ausbaustaufe des Dienstes D. Dabei wird dem Benutzer an seinem Kommunikationsendgerät KE eine integrierte Benutzeroberfläche angeboten, die optimal auf das tatsächlich ihm zur Verfügung stehende Dienstangebot abgestimmt ist. Zudem kann der Benutzer unter ein- und derselben Benutzeroberfläche gleichzeitig sowohl den Dienst D als auch das Kommunikationsendgerät EG und je nach Komplexität der Dienstanwendung auch weitere Geräte konfigurieren, wobei unnötige Mehrfach-Eingaben von Parametern und Einstellungen entfallen und die irrtümliche Eingabe sich widersprechender Parameter erst gar nicht stattfinden kann. Selbstverständlich ist das Ausführungsbeispiel nicht auf den hier gezeigten VoIP-Dienst beschränkt, sondern es können auch noch beliebige andere zentrale Dienste D im Zusammenwirken mit dem Kommunikationsendgerät EG konfiguriert werden.

## Patentansprüche

1. Konfigurierungs-Einrichtung (KA) für eine Kommunikationsanordnung mit einem Kommunikationsendgerät (EG) und mit einem zentralen Dienst (D),
**dadurch gekennzeichnet, dass** die Konfigurierungs-Einrichtung (KA)
- eine erste Schnittstelle zu einem ersten Konfigurierungs-Zugang des Kommunikationsendgerätes (EG) aufweist,
- eine zweite Schnittstelle zu einem zweiten Konfigurierungs-Zugang des zentralen Dienstes (D) aufweist,
- zur Erzeugung einer grafischen und/oder textbasierten Benutzeroberfläche für einen auf den zentralen Dienst (D) bezogenen Benutzerdialog und für eine Übermittlung dieser Benutzeroberfläche zu einem konfigurierenden Gerät und für einen Empfang von den seitens eines Benutzers an dieser Benutzeroberfläche durchgeführten Eingaben eingerichtet ist, und
- zur Auswertung dieser Eingaben eingerichtet ist, wobei die Konfigurierungs-Einrichtung (KA) anhand der Eingaben zur Erzeugung erster Konfigurierungs-Daten für das Kommunikationsendgerät (EG) und zweiter Konfigurierungs-Daten für den zentralen Dienst (D) ausgebildet ist, und wobei die Konfigurierungs-Einrichtung (KA) zur Übertragung der ersten Konfigurierungs-Daten über die erste Schnittstelle und der zweiten Konfigurierungs-Daten über die zweite Schnittstelle eingerichtet ist.

2. Konfigurierungs-Einrichtung (KA) nach Patentanspruch 1,
**dadurch gekennzeichnet, dass**
das konfigurierende Gerät ein externes Gerät ist, welches mittels eines Datenkanals mit der Konfigurierungs-Einrichtung (KA) verbunden ist.

3. Konfigurierungs-Einrichtung (KA) nach einem der vorhergehenden Patentansprüche,
**dadurch gekennzeichnet, dass**
das konfigurierende Gerät das Kommunikationsendgerät (EG) ist.

4. Konfigurierungs-Einrichtung (KA) nach einem der vorhergehenden Patentansprüche,
**dadurch gekennzeichnet, dass**
die Benutzeroberfläche grafische und/oder textbasiert oder sprachgesteuert ausgebildet ist.

5. Konfigurierungs-Einrichtung (KA) nach Patentanspruch 3 oder 4,
**dadurch gekennzeichnet, dass**
die Konfigurierungs-Einrichtung (KA) für die Übermittlung der Benutzeroberfläche zu dem Kommunikationsendgerät (EG) und für den Empfang der Eingaben des Benutzers an dem Kommunikationsendgerät (EG) eine dritte Schnittstelle für einen Datenaustausch mit dem Kommunikationsendgerät (EG) aufweist.

6. Konfigurierungs-Einrichtung (KA) nach Patentanspruch 5,
**dadurch gekennzeichnet, dass**
die dritte Schnittstelle zum Datenaustausch mittels des HTTP-Protokolls und/oder des WAP-Protokolls ausgebildet ist.

7. Konfigurierungs-Einrichtung (KA) nach einem der vorhergehenden Patentansprüche,
**dadurch gekennzeichnet, dass**
die Konfigurierungs-Einrichtung (KA) zur Erzeugung der Benutzeroberfläche als HTML-Seite, XHTML-Seite oder als WML-Seite eingerichtet ist.

8. Konfigurierungs-Einrichtung (KA) nach einem der vorhergehenden Patentansprüche,
**dadurch gekennzeichnet, dass**
die Benutzeroberfläche erste Elemente zur Konfigurierung des Kommunikationsendgerätes (EG) und zweite Elemente zur Konfigurierung des zentralen Dienstes (D) aufweist.

9. Konfigurierungs-Einrichtung (KA) nach einem der vorhergehenden Patentansprüche,
**dadurch gekennzeichnet, dass**
die erste Schnittstelle einen Umsetzer (U) für eine Umsetzung der ersten Konfigurierungs-Daten in ein von dem Kommunikationsendgerät (EG) abhängiges erstes Administrations-Protokoll aufweist.

10. Konfigurierungs-Einrichtung (KA) nach Patentanspruch 9,
**dadurch gekennzeichnet, dass**
die der Umsetzer (U) zur Umsetzung und Übermittlung der ersten Konfigurierungs-Daten mittels des TA-069-Protokolls oder des OMA-DM-Protokolls eingerichtet ist.

11. Konfigurierungs-Einrichtung (KA) nach einem der vorhergehenden Patentansprüche,
**dadurch gekennzeichnet, dass**
die zweite Schnittstelle zur Übermittlung der zweiten Konfigurierungs-Daten mittels eines von dem zentralen Dienst (D) verwendeten Administrations-Protokolls eingerichtet ist.

12. Konfigurierungs-Einrichtung (KA) nach einem der vorhergehenden Patentansprüche,
**dadurch gekennzeichnet, dass**
die Konfigurierungs-Einrichtung (KA) als ein mittels einer Software gebildeter Dienst (D) ausgebildet ist, wobei dieser Dienst (D) und der zentrale Dienst (D) auf einer gemeinsamen Server-Hardware (S) installiert sind.

13. Konfigurierungs-Einrichtung (KA) nach einem der vorhergehenden Patentansprüche,
**dadurch gekennzeichnet, dass**
die Konfigurierungs-Einrichtung (KA) zur Verwendung mit einem VoIP-Telefon, einem DECT-Telefon oder einem GSM-Telefon als Kommunikationsendgerät (EG) eingerichtet ist.

14. Konfigurierungs-Einrichtung (KA) nach einem der vorhergehenden Patentansprüche,
**dadurch gekennzeichnet, dass**
die Konfigurierungs-Einrichtung (KA) zur Generierung und zur Übertragung der Benutzeroberfläche zu einer auf dem konfigurierenden Gerät installierten Browser-Software eingerichtet ist.

15. Konfigurierungs-Einrichtung (KA) nach einem der vorhergehenden Patentansprüche,
**dadurch gekennzeichnet, dass**
die Konfigurierungs-Einrichtung (KA) zur Konfigurierung eines VoIP-Dienstes (D), eines E-Mail-Dienstes (D), eines Kalender-Dienstes (D) oder eines Voice-Mail-Dienstes (D) als zentralem Dienst (D) eingerichtet ist.

16. Verfahren zur Konfigurierung einer Kommunikationsanordnung mit einem Kommunikationsendgerät (EG) und einem zentralen Dienst (D),
wobei die Konfigurierungs-Einrichtung (KA) eine erste Schnittstelle zu einem ersten Konfigurierungs-Zugang des Kommunikationsendgerätes (EG) aufweist, und
wobei die Konfigurierungs-Einrichtung (KA) eine zweite Schnittstelle zu einem zweiten Konfigurierungs-Zugang des zentralen Dienstes (D) aufweist,
**dadurch gekennzeichnet,**
**dass**
- die Konfigurierungs-Einrichtung (KA) in einem ersten Schritt von dem Kommunikationsendgerät (EG) eine Anfrage zur auf das Kommunikationsendgerät (EG) bezogenen Konfigurierung des zentralen Dienstes (D) empfängt,
- in einem zweiten Schritt die Konfigurierungs-Einrichtung (KA) eine Benutzeroberfläche für die Konfigurierung erzeugt und an ein konfigurierendes Gerät zur Anzeige und Bedienung durch einen Benutzer überträgt,
- in einem dritten Schritt zumindest eine Benutzereingabe an der Benutzeroberfläche zu der Konfigurierungs-Einrichtung (KA) übertragen wird, und
- in einem vierten Schritt durch die Konfigurierungs-Einrichtung (KA) die Eingabe ausgewertet wird, wobei abhängig von der zumindest einen Benutzereingabe zumindest ein erster Befehl zur Konfigurierung des Kommunikationsendgerätes (EG) erzeugt und an das Kommunikationsendgerät (EG) übermittelt und dort angewendet wird, und zumindest ein zweiter Befehl zur Konfigurierung des zentralen Dienstes (D) erzeugt, zu dem zentralen Dienst (D) übertragen und dort angewendet wird.
